# EUROPÄISCHE PATENTSCHRIFT

(11) **EP 0 793 871 B1**
(45) Veröffentlichungstag und Bekanntmachung des Hinweises auf die Patenterteilung: **03.02.1999**
(21) Anmeldenummer: 95940221.5
(22) Anmeldetag: 21.11.1995
(51) Int. Cl.: H02K 5/128, F04D 13/06

(54) **AM SPALTTOPFFLANSCH LÖSBAR BEFESTIGTER MOTORENSTATOR**
MOTOR STATOR REMOVABLY FITTED ON THE SPLIT POT FLANGE
STATOR DE MOTEUR MONTE AMOVIBLE SUR LE FLASQUE D'UN MANCHON D'ENTREFER

(30) Priorität: 21.11.1994 DE 4441378
(43) Veröffentlichungstag der Anmeldung: 10.09.1997
(73) Patentinhaber: WILO GmbH, 44236 Dortmund (DE)
(72) Erfinder: KAUL, Günther, D-58456 Witten (DE)
(74) Vertreter: Cohausz, Helge B., Dipl.-Ing.
(86) Internationale Anmeldenummer: EP9504572
(87) Internationale Veröffentlichungsnummer: WO9616464

(56) Entgegenhaltungen:
- EP-A- 0 168 744
- EP-A- 0 281 818
- EP-A- 0 412 858
- DE-U- 9 200 510
- PATENT ABSTRACTS OF JAPAN Bd. 018, Nr. 218 (E-1539) 19 April 1994 & JP,A,06 014 489 (JAPAN SERVO CO LTD) 21 Januar 1994

## Beschreibung

Die Erfindung betrifft eine Spalttopf-Kreiselpumpe mit einem am Pumpengehäuse befestigten Elektromotor und einem am Spalttopf angeordneten Spalt topf flansch, wobei der Spalttopf mit seinem Spalttopfflansch an dem Pumpengehäuse abdichtend lösbar befestigt ist und der Spalttopf den Motorenstator trägt, der an der Pumpe oder am Spalttopfflansch mittels einer Steckverbindung lösbar befestigt ist.

Es ist bekannt, in einem eine Pumpe antreibenden Elektromotor einen Spalttopf zwischen Rotor und Stator anzuordnen, wobei der Stator von einem Motorengehäuse umgeben ist, das den Stator hält. Das Motorengehäuse hat hierbei eine tragende Funktion für den Stator und oft auch für den Spalttopf und das äußere Wellenlager.

Einen derartigen gattungsbildenden Stand der Technik zeigt die DE-G 9200510. Die aus dieser Schrift bekannte Naßläuferpumpe hat einen Spalttopf, an dem ein Spalttopfkragen angeformt ist. Mittels einer Schnappverbindung ist der Spalttopf mit seinem Spalttopfkragen lösbar an dem Pumpengehäuse gehalten, wobei zwischen dem Spalttopfflansch und dem Pumpengehäuse ein Abdichtring einliegt.

Der Spalttopf trägt mit seiner zylindrischen Mantelfläche das Statorblechpaket.

Ferner ist aus der DE-OS 2751516 eine Heizungsumwälzungpumpe bekannt, bei der der Stator in axialer Richtung auf das Spaltrohr aufgeschoben werden kann. Sobald der Stator vollständig auf das Spaltrohr aufgeschoben ist, muß er von Hand verdreht werden, wodurch der Stator mittels eines Schnellverschlusses an einer Montageplatte festsetzbar ist. Nachteilig bei dieser Ausführungsform ist, daß der Stator lediglich mittels einer Verdrehbewegung an der Montageplatte befestigbar ist. Der Vorteil des Schnellverschlusses liegt darin, daß der Stator bei Bedarf von dem Spaltrohr abziehbar ist. Durch den Betrieb der Pumpe kann es jedoch dazu kommen, daß sich zwischen dem Stator und dem Spalttopf Teilchen ablagern, welche den Reibwiderstand zwischen Stator und Spaltrohr bzw. Spalttopf derartig erhöhen, daß ein Verdrehen des Stators ohne Beschädigung des Spalttopfes nicht mehr möglich ist.

Des weiteren ist aus der EP-A-0 412 858 eine Kreiselpumpe bekannt, bei der der Motorenstator auf den Spalttopf aufgeschoben ist. Der Stator ist von einem Gehäuse aufgenommen, das die Lagerung für die das Pumpenrad tragende Welle aufnimmt.

Außerdem beschreibt die EP-A-0 168744 ein Lagerschild für Gleichstrom-Kleinstmotoren, dessen Grundkörper und Lagergehäuse als einstückiges Kunststoffspritzteil ausgebildet. Das Lagerschild weist an seinem dem Stator zugewandten Umfang Rastmittel auf, die zur Einrastung in einen mit entsprechenden Ausnehmungen versehenen gespritzten Kunststoffmagneten dienen.

Aufgabe der Erfindung ist es daher, eine Kreiselpumpe der eingangs genannten Art so zu verbessern, daß zur Befestigung des Stators dieser lediglich in axialer Richtung verschoben werden muß.

Diese Aufgabe wird erfindungsgemäß dadurch gelöst, daß der Motorenstator von einem Motorengehäuse, insbesondere geringerer Stabilität, umgeben ist, das statt einer tragenden Funktion für den Stator nur eine Schutzfunktion besitzt. Dies ermöglicht es, das Gehäuse aus dünnem Kunststoff zu fertigen, welches nur noch eine Schutz- und Abdeckfunktion wahrnimmt.

Es wird keine Verdrehbwegung mehr benötigt, um den Motorenstator in axialer Richtung am Pumpengehäuse oder am Spalttopfflansch festzusetzen. Somit ist stets gewährleistet, daß auch nach längerem Betrieb der Pumpe der Motorenstator problemlos vom Spalttopf abgezogen werden kann.

In einer bevorzugten Ausgestaltung der Erfindung ist die Steckverbindung eine Druckknopfverbindung.

Besonders vorteilhaft ist es hierbei, wenn der Außendurchmesser des Spalttopfflansches etwa gleich dem Außendurchmesser des Pumpengehäuses, insbesondere des Pumpengehäuseflansches ist, an dem der Spalttopfflansch befestigt ist. Auch sollte zwischen dem Spalttopfflansch vor dem Pumpengehäuseflansch ein Dichtring liegen.

Von größtem Vorteil ist es ferner, wenn der insbesondere verstärkte Spalttopfflansch das Lagerschild zwischen Pumpe und Motor bildet.

Es wird damit eine Pumpe geschaffen, die bei einfacher Konstruktion und Montage ein geringeres Gewicht und geringere Außenabmessungen hat. Wird der Stator, insbesondere im Servicefall demontiert, so bleibt der hydraulische Raum der Pumpe geschlossen.

Ein Ausführungsbeispiel der Erfindung ist in Zeichnungen dargestellt und wird im folgenden näher beschrieben.

Es zeigen:
- Figur 1:: einen axialen schnitt durch die Pumpe,
- Figur 2:: eine Seitenansicht der Pumpe und
- Figur 3:: die Pumpe mit abgenommenen Motorstator.

Die Kreiselpumpe weist ein Pumpengehäuse 1 auf, mit einem koaxialen Einlaß 2 und einem tangentialen nicht dargestellten Auslaß. Im Pumpenraum ist das Laufrad 4 an einem Ende der Motorenwelle 5 befestigt. Der Pumpenraum 3 ist auf der dem Einlaß 2 abgewandten Seite durch einen Spalttopf verschlossen, in dessen Innerem sowohl das dem Pumpenraum zugewandte Wellenlager 7, als auch das dem Pumpenraum abgewandte Wellenlager 8 koaxial befestigt ist. Zwischen beiden Lagern 7, 8 ist auf der Welle 5 der Rotor 9 des Elektromotors befestigt. Der Spalttopf 6 bildet einen Flansch 10, dessen Außendurchmesser etwa gleich dem Außendurchmesser des Pumpengehäuses, insbesondere des Pumpengehäuseflansches, ist. Hierbei ist der Spalttopfflansch 10 aus einem Material (Metall oder Kunststoff) größerer Dicke bzw. Stärke gefertigt als der übrige Spalttopf, da im Bereich des Spalttopfflansches der Spalttopf die Funktion des Lagerschildes zwischen Pumpe und Motor übernimmt. Der Spalttopf 6 besitzt eine solche hohe Stabilität, daß er den Motorenstator 12 trägt, ohne daß dieser von einem Motorengehäuse gehalten sein muß. Vielmehr kann bei dieser Konstruktion das Motorengehäuse fehlen oder aber von solch geringer Stabilität ausgeführt sein, daß es nur noch eine Schutz- oder Abdeckfunktion besitzt.
So kann das Motorengehäuse aus verhältnismäßig dünnem Kunststoff bestehen.

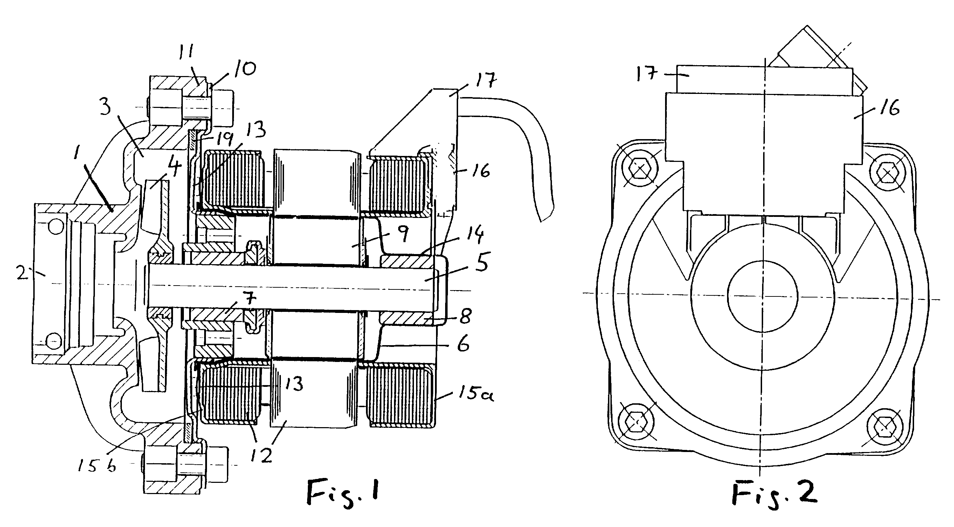

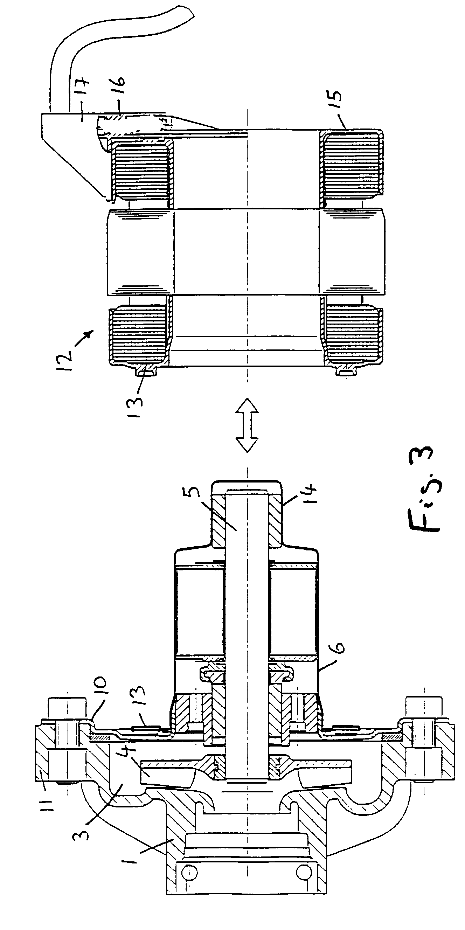

Wie Figur 3 zeigt, wird der Motorenstator mit all seinen teilen und Anschlüssen in kompletter Bauform von der der Pumpe abgewandten Seite her auf den Spalttopf 6 aufgeschoben und wird mittels der Steckverbindung, insbesondere einer Druckknopfverbindung 13, welche zwischen einer Stirnseite des Stators 12 und dem Flansch 10 des Spalttopfes angeordnet ist, befestigt. Der Motorenstator ist somit in radialer und axialer Richtung festgesetzt.

Der Spalttopf 6 bildet an dem den Pumpenraum 3 abgewandten Ende im Bereich seines Bodens einen topfförmigen Bereich 14 geringeren Durchmessers als der des übrigen Spalttopfes. In diesem Topf 14 ist das Lager 8 befestigt, insbesondere eingedrückt, so daß beide Lager 7, 8 vom Spalttopf 6 gehalten sind.

Der Motorenstator 12 besitzt auf dem den Pumpenraum 3 abgewandten Ende eine Wickelkopfkappe 15, an der eine Steckleiste 16 für elektrische Anschlüsse befestigt, insbesondere angeformt ist. In diese Steckleiste 16 ist ein Anschlußstecker 17 mit Anschlußleitung 18 eingesteckt. In gleicher Weise besitzt das andere Ende des Stators eine Wickelkopfkappe 19, an der die Druckknopfverbindung 13 fest ist.

## Patentansprüche

1. Spalttopf-Kreiselpumpe mit einem am Pumpengehäuse befestigten Elektromotor und einem am Spalttopf (6) angeordneten Spalttopfflansch (10), wobei der Spalttopf mit seinem Spalttopfflansch (10) an dem Pumpengehäuse abdichtend lösbar befestigt ist und der Spalttopf (6) den Motorenstator trägt, der an der Pumpe oder am Spalttopfflansch mittels einer Steckverbindung lösbar befestigt ist, **dadurch gekennzeichnet,** daß der Motorenstator (12) von einem Motorengehäuse, insbesondere geringerer Stabilität, umgeben ist, das statt einer tragenden Funktion für den Stator nur eine Schutzfunktion besitzt.

2. Spalttopf-Kreiselpumpe nach Anspruch 1, **dadurch gekennzeichnet,** daß die Steckverbindung eine Druckknopfverbindung (13) ist.

3. Spaltttopf-Kreiselpumpe nach Anspruch 1 oder 2, **dadurch gekennzeichnet,** daß der Außendurchmesser des Spalttopfflansches (10) etwa gleich dem Außendurchmesser des Pumpengehäuses, insbesondere des Pumpengehäuseflansches (11) ist, an dem der Spalttopfflansch (10) befestigt ist.

4. Spalttopf-Kreiselpumpe nach einem der vorherigen Ansprüche, **dadurch gekennzeichnet,** daß zwischen dem Spalttopfflansch (10) und dem Pumpengehäuseflansch (11) ein Dichtring (19) liegt.

5. Spalttopf-Kreiselpumpe nach einem der vorhergehenden Ansprüche, **dadurch gekennzeichnet,** daß der Motorenstator (12) die äußerste Hülle des Motors bildet.

6. Spalttopf-Kreiselpumpe nach einem der vorherigen Ansprüche, **dadurch gekennzeichnet,** daß das Motorengehäuse aus Kunststoff ist.

7. Spalttopf-Kreiselpumpe nach einem der vorherigen Ansprüche, **dadurch gekennzeichnet,** daß der Spalttopfflansch (10) gegenüber dem Spalttopf verstärkt ist.

## Claims

1. A split pot centrifugal pump having an electric motor attached to the pump casing and a split pot flange (10) disposed on the split pot (6), wherein a split pot is sealingly and releasably attached by its split pot flange (10) to the pump casing and the split pot (6) bears the motor stator, which is releasably attached to the pump or the split pot flange by means of a plug connection, **characterised in that** the motor stator (12) is enclosed by a motor casing, more particularly of low stability, which instead of a supporting function for the stator has only a protective function.

2. A split pot centrifugal pump according to claim 1, **characterised in that** the plug connection is a press button connection (13).

3. A split pot centrifugal pump according to claims 1 or 2, **characterised in that** the external diameter of the split pot flange (10) is substantially equal to the external diameter of the pump casing, more particularly of the pump casing flange (11) to which the split pot flange (10) is attached.

4. A split pot centrifugal pump according to one of the preceding claims, **characterised in that** a sealing ring (19) is disposed between the split pot flange (10) and the pump casing flange (11).

5. A split pot centrifugal pump according to one of the preceding claims, **characterised in that** the motor stator (12) forms the outermost jacket of the motor.

6. A split pot centrifugal pump according to one of the preceding claims, **characterised in that** the casing is made of plastics.

7. A split pot centrifugal pump according to one of the preceding claims, **characterised in that** the split pot flange (10) is reinforced in relation to the split pot.

## Revendications

1. Pompe centrifuge à manchon d'entrefer avec un moteur électrique fixé au carter de pompe et un flasque (10) de manchon d'entrefer disposé sur le manchon d'entrefer (6), le manchon d'entrefer avec son flasque (10) de manchon d'entrefer étant fixé amovible de manière étanche au carter de pompe et le manchon d'entrefer (6) portant le stator du moteur qui est monté amovible sur la pompe ou sur le flasque de manchon d'entrefer au moyen d'une liaison enfichable,
caractérisée en ce que le stator (12) du moteur est entouré par un carter de moteur, en particulier de robustesse inférieure, qui ne possède, au lieu d'une fonction de support, qu'une fonction de protection pour le stator.

2. Pompe centrifuge à manchon d'entrefer selon la revendication 1,
caractérisée en ce que la liaison enfichable est une liaison à bouton-poussoir (13).

3. Pompe centrifuge à manchon d'entrefer selon la revendication 1 ou 2,
caractérisée en ce que le diamètre extérieur du flasque (10) de manchon d'entrefer est sensiblement égal au diamètre extérieur du carter de pompe, en particulier du flasque (11) de carter de pompe auquel est fixé le flasque (10) de manchon d'entrefer.

4. Pompe centrifuge à manchon d'entrefer selon l'une des revendications précédentes,
caractérisée en ce qu'une bague d'étanchéité (19) est disposée entre le flasque (10) de manchon d'entrefer et le flasque (11) du carter de pompe.

5. Pompe centrifuge à manchon d'entrefer selon l'une des revendications précédentes,
caractérisée en ce que le stator (12) du moteur forme la gaine la plus extérieure du moteur.

6. Pompe centrifuge à manchon d'entrefer selon l'une des revendications précédentes,
caractérisée en ce que le carter du moteur est en matière synthétique.

7. Pompe centrifuge à manchon d'entrefer selon l'une des revendications précédentes,
caractérisée en ce que le flasque (10) de manchon d'entrefer est renforcé par rapport au manchon d'entrefer.
